# EUROPEAN PATENT APPLICATION

(11) **EP 4 361 961 A1**
(43) Date of publication of application: **01.05.2024**
(21) Application number: 22204583.3
(22) Date of filing: 28.10.2022
(51) Int. Cl.: G06V 10/80, G06V 10/82, G06V 20/58, G06V 40/20, G06T 7/155, G06V 10/34, G06V 40/10

(54) **METHOD OF DETERMINING INFORMATION RELATED TO ROAD USER**

(71) Applicant: Aptiv Technologies AG, 8200 Schaffhausen (CH)
(72) Inventor: HAHN, Lukas, Wuppertal (DE); PAUS, André, Wuppertal (DE); SCHAEFER, Maximilian, Wuppertal (DE)
(74) Representative: Lewis Silkin LLP

(57) **Abstract**

The method of determining information related to a road user in an environment of a vehicle, comprising the steps of:
receiving, from vehicle sensors, a digital image and a Lidar point cloud, both representing a scene in the environment of the vehicle;
detecting a road user in said scene based on the received digital image and Lidar point cloud;
generating a combined digital representation of the detected road user by combining corresponding image data and Lidar data associated with the detected road user,
determining information related to the detected road user by processing the combined digital representation of the detected road user.

## Description

### TECHNICAL FIELD

The present disclosure relates to a method of determining information related to a road user in an environment of a vehicle.

### BACKGROUND

An autonomous vehicle or a semi-autonomous vehicle equipped with one or more ADAS (Advanced driver-assistance system) systems may drive near vulnerable road users like pedestrians and cyclists. When an autonomous or semi-autonomous vehicle drives for example in an urban environment, it often significantly reduces its velocity, in an automated manner, such that accidents with vulnerable road users like pedestrians could be ruled out, even if the vulnerable road users do not have a dangerous behaviour. Such a reduction of the velocity of the autonomous vehicles in an urban environment is an issue for several reasons. Indeed, it is likely to close traffic jams. Furthermore, the velocity reduction of an autonomous vehicle may not be expected by a driver of another human-driven vehicle present in the surroundings. This driver may react in an inappropriate manner, example by overtaking the autonomous vehicle in a dangerous situation, which may cause an accident between the two vehicles. On roads used by a mix of autonomous or semi-autonomous vehicles and human-driven vehicles, the velocity reduction of the autonomous or semi-autonomous vehicles is a problem as it is likely to increase the number of accidents.

When driving a vehicle, a human driver considers in real time a scene including multiple road users (vehicle, pedestrian, bicycle, or any other potentially moving object) in an environment surrounding the vehicle and takes maneuver decisions based on the environment and a short-term prediction of how the multiple road users may behave. In particular, the human driver can generally predict the trajectory of a pedestrian based on an observation of the pedestrian behavior and act based on his prediction of the pedestrian's trajectory. Generally, the human driver significantly reduces the velocity of the vehicle close to a pedestrian only when he anticipates that the pedestrian may have a dangerous behavior in a short-term period, which is actually a rare situation.

There is a need to improve the situation. More precisely, there is a need for a vehicle to determine more accurately information related to a road user, for example a pedestrian.

### SUMMARY

The present disclosure concerns a method of determining information related to a road user in an environment of a vehicle, comprising the steps of:
receiving, from vehicle sensors, a digital image and a Lidar point cloud, both representing a scene in the environment of the vehicle;
detecting a road user in said scene based on the received digital image and Lidar point cloud;
generating a combined digital representation of the detected road user by combining corresponding image data and Lidar data associated with the detected road user,
determining information related to the detected road user by processing the combined digital representation of the detected road user.

The determination of information related to the detected road user based on a digital representation of the detected road user that combines image data, such as camera data, and Lidar data associated with the detected road user allows to determine more accurate information on the detected road user without requiring intensive computational effort or resources.

In an embodiment, the step of determining information related to the detected road user may include determining key points of the detected road user, for example body key points.

In an embodiment, the method may further comprise a step of determining 3D key points in a 3D space from the determined key points of the detected road user, based on the Lidar data. Thanks to that, the method allows to determine 3D key points of the detected road user, such as a 3D body key point representation of the detected road user, with very low computational efforts.

For example, in case the road user is a pedestrian, the step of detecting key points may include detecting body key points of the pedestrian.

In an embodiment, the combined digital representation of the detected road user may include a collection of points and, for each point, a combination of corresponding RGB data, Lidar depth data and Lidar intensity data.

In an embodiment, the step of determining information related to the detected road user may include determining an orientation and/or a pose of the detected road user based on the determined key points and estimating, based on the determined orientation and/or pose of the detected road user, an awareness state of said road user selected among a plurality of predefined awareness states indicative of how the user is aware of the vehicle.

In an embodiment, the method may further comprise a step of increasing the Lidar point density of the detected road user by performing a morphological image processing operation, before generating the combined digital representation. This allows to improve the accuracy in the determination of information related to the detected road user.

For example, the morphological image processing operation can include a morphological closing operation for filling gaps in the detected road user.

In an embodiment, the method further comprises a step of predicting a trajectory of the road user based on the determined information related to the road user.

In an embodiment, the method may further comprise a step of controlling a function of the vehicle based on the predicted trajectory and/or based on the determined information related to the detected road user. For example, the method can comprise a step of controlling an ADAS system of the vehicle based on the predicted trajectory and/or based on the determined information related to the detected road user a step of controlling.

In an embodiment, in case that 3D key points of the detected road user are determined, the step of predicting a trajectory of the road user may include predicting a plurality of trajectories of the road user with respective probability values and the method further includes, for each predicted trajectory, a step of assigning a score to said predicted trajectory, based on the determined 3D key points, and a step of updating a probability value of said predicted trajectory based on the assigned score.

In another embodiment, in case that 3D key points of the detected road user are determined, the method further includes a step of determining an information on a range of directions in which the predicted trajectory should be, based on the determined 3D key points, and a step of providing said information on the range of directions as input for the prediction of trajectory.

The present disclosure further comprises:
- a computer system comprising a processor configured to carry out the steps of the method previously defined;
- a computer program comprising instructions which, when the program is executed by a computer, cause the computer to carry out the steps of the method previously defined;
- a vehicle comprising the system above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a system for prediction of information related to a pedestrian, according to an embodiment.
Figure 2 represents a flowchart of a method for predicting information related to a pedestrian, according to an embodiment.

### DETAILED DESCRIPTION

The present disclosure concerns a method of determining information related to a road user, for example a pedestrian, in an environment of a vehicle 200. The method can be a computer-implemented method. It can be carried out by a computer or data processing system 100 in the vehicle 200.

The present disclosure also concerns a method of controlling a function of the vehicle 200, for example an ADAS (Advanced Driver Assistance System) system, based on the determined information related to the road user.

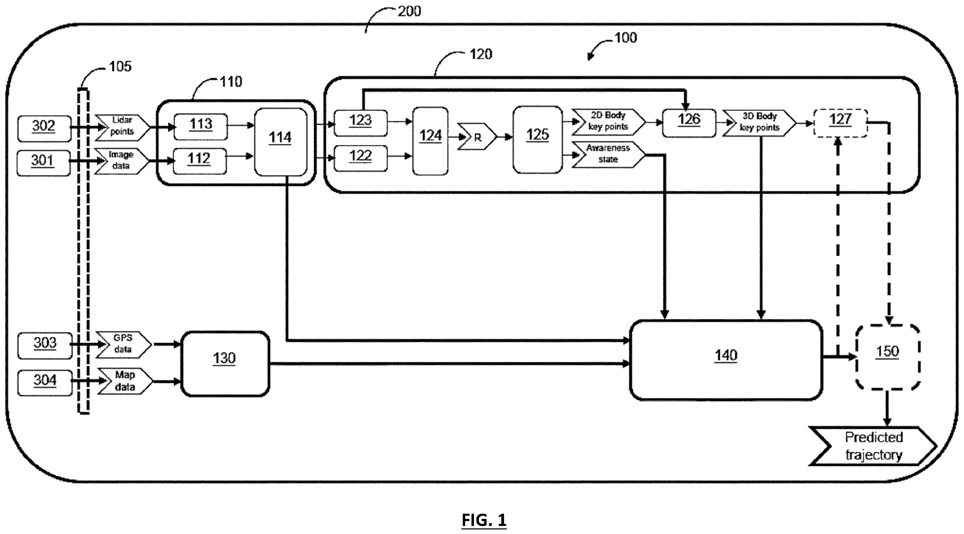

Figure 1 illustrates the system 100, according to an embodiment. The system 100 includes a mix of hardware and software. The system 100 may comprise a processor configured to carry out the steps of the method described later.

In an embodiment, the system 100 has the functions of:
- detecting a road user in an environment of the vehicle 200,
- determining key points, such as body key points, and an awareness state of the detected road user; and
- predicting a trajectory of the detected road user based on the determined key points and awareness state of the detected road user.

The system 100 has an input interface 105 to receive data from different data sources to which the system 100 is connected.

The data sources include vehicle sensors comprising a camera or image sensor 301 and a Lidar sensor 302, configured to respectively capture a digital image and a Lidar point cloud, both representing a same scene in an environment of the vehicle 200, and transmit the digital image and the Lidar point cloud to the system 100 as input data. For example, the camera 301 is a RGB camera. It may be configured to capture 2D images. The Lidar point cloud includes a plurality of points and, for each point, a depth information and an intensity information.

The data sources may also include an automotive navigation system, such as the GPS (global positioning system) receiver 303 of the vehicle 200, that is configured to transmit geolocation or GPS data related to the vehicle 200.

The data sources may further include a map data provider 304. For example, the map data provider 304 can be a distant server to which the system 100 is connected through a communication network. The received map data may represent a region where the vehicle 200 operates or is expected to operate. Alternatively, the map data may be stored in a local memory in the vehicle 200.

The system 100 may comprise the following elements:
- a detection module 110 having the function of detecting one or more road users based on a received digital image and a received Lidar point cloud representing a same scene in an environment of the vehicle 200;
- a data processing device 120 having the function of determining information related to a detected road user, including key points and an awareness state of the detected road user;
- a trajectory prediction module 140 having the function of predicting a trajectory of the detected road user based on the determined information related to this detected road user.

In an embodiment, the detection module 110 is configured to detect one or more objects in a received image data and a received Lidar point cloud, both representing a same scene. The detected objects may include road users such as pedestrians, cyclists, etc. In operation, the detection module 110 may:
- receive a digital image from the camera 301 and a Lidar point cloud from the Lidar sensor 302,
- perform object detection independently in the digital image and in the Lidar point cloud,
- for each object detected in both domains, fuse the object detections in the digital image and in the Lidar point cloud, and
- track each detected object.

The actions of object detection, fusion and tracking can be performed in real-time from a real-time data stream of digital images received from the camera 301 and a real-time data stream of Lidar point clouds received from the Lidar sensor 302.

In a particular embodiment, the detection module 110 may include a first object detection block 112 adapted to detect objects in a digital image, a second object detection block 113 adapted to detect objects in a Lidar point cloud, and a block of object fusion and tracking 114 adapted to fuse the corresponding object detections at the output of the blocks 112 and 113 and track the detected objects over time.

A detected object may be a road user, for example a pedestrian, a cyclist, etc..

The object detection block 112 may be configured to process a received digital image by implementing a segmentation method for digital images. For example, the segmentation method includes an action of generating object bounding boxes, each bounding box containing an object, and classify each object bounding box, for example as a pedestrian, a cyclist, or any other class of road user.

The object detection block 113 may be configured to process a received Lidar point cloud by implementing a segmentation method for Lidar point clouds, such as a method of panoptic segmentation. Typically, the segmentation of the Lidar point cloud includes an action of clustering the Lidar points into a set of Lidar points corresponding to an object, and an action of assigning a class to each set of Lidar points, such as pedestrian, cyclist, vehicle, ....

The data processing device 120 has the role of determining information related to a detected road user. It is configured to combine corresponding image data and Lidar data associated with a detected road user so as to generate a combined digital representation of the detected road user having multiple layers or channels, as described later in more detail, and then process the combined digital representation of the detected road user to determine information related to the detected road user. As previously indicated, the information related to the detected road user may include key points of the detected road user, for example body key points for a pedestrian or cyclist, and an awareness state indicative of how the detected road user is aware of the vehicle 200.

In an embodiment, the data processing device 120 may include the following elements:
- a first pre-processing block 122 configured to extract from the received digital image a cropped image region containing the detected road user;
- a second pre-processing block 123 configured to extract from the received Lidar point cloud a set of Lidar points including the detected road user; and
- a combination block 124 configured to combine the cropped image region and the set of Lidar points, both containing the detected road user, to generate a combined digital representation R of the detected object.

For example, the digital image can be a RGB image including, for each image pixel, a vector of three values for the three primary colour channels: red, green, and blue. The Lidar point cloud can include, for each Lidar point, a vector of two values for two channels of depth and intensity. The depth information is calculated through time-of-flight and represents how long it takes for a light emitted by the Lidar sensor to travel back. The intensity information indicates how strongly is the reflection of the light that the Lidar sensor has received and provides information on the surface and/or material the light of the Lidar sensor hits. The combination block 124 may be configured to combine, for each point or element of the generated representation R of the detected road user, the three RGB values of a corresponding image pixel and the depth and intensity values of a corresponding Lidar point. As a result, the generated representation R of the detected road user has five layers: three layers corresponding to the three RGB channels and two layers for depth and intensity.

The Lidar data point clouds may be sparse and have a density of points that is less than the density of pixels in the digital images. Optionally, the second preprocessing block 123 may be configured to increase the point density of the set of Lidar points containing the detected road user by processing this set of Lidar points with an algorithm of morphological image processing, for example a morphological closing processing. This allows to fill gaps with additional points in the set of Lidar points containing the detected road user.

The data processing device 120 may further include a processing block 125 configured to process the combined digital representation R of the detected road user so as to determine information related to the detected road user, as described below.

In an embodiment, the processing block 125 is configured to determine key points of the detected road user. In case the road user is a human like a pedestrian or cyclist, the key points include body key points like shoulders, elbows, eyes, knees, etc... The processing block 125 may determine or generate a key point representation of the detected road user, such as a skeleton model including the determined body key points. In an embodiment, the representation of the determined key points at the output of the processing block 125 is a 2D representation since the digital image received from the camera 301 is a 2D image.

Furthermore, the processing block 125 may be further configured to estimate an orientation and/or a pose of the detected road user based on the determined body key points.

In addition, based on the orientation and/or pose of the detected road user, the processing block 125 may be configured to estimate an awareness state of the detected road user selected among a plurality of predefined awareness states indicative of how the road user is aware of the vehicle 200. For example, four classes of awareness states are predefined: a) aware, b) partially aware, c) unaware, and d) distracted. For example, these classes of awareness states for a person as road user can be defined as follows:
a) aware: the face of the person is fully visible, indicating that the road user must have seen the vehicle 200;
b) partially aware: a part of the person's face is visible and the person is not facing the vehicle 200 but should be able to see the vehicle 200 in his peripheral view;
c) unaware: the face of the person is completely hidden and it is likely that the person cannot see the vehicle 200;
d) distracted: although the face of the person might be visible or partially visible, the person is preoccupied with looking at something such as a smartphone or newspaper.
The processing block 125 may select one of these predefined awareness state classes, based on the estimated orientation and/or pose of the detected road user.

The processing block 125 may be implemented by a neural network running on a processor. This neural network can be trained with input data including a collection of multi-layer representations R of road users, generated by combining digital images and Lidar point clouds associated with the road users, and output data including, for each road user, determined key points, an orientation and/or pose, and an awareness state class.

Optionally, the data processing device 120 may further include a 2D/3D converter 126 configured to convert the 2D key points provided at the output of the processing block 125 into 3D key points in a 3D space based on the Lidar depth information of the key points. The 2D representation of key points may be transformed into a 3D representation of the key points by using the Lidar depth information of the key points. In an embodiment, the 2D/3D converter 126 may transform a 2D skeleton model of body key points into a 3D skeleton model of body key points.

In an embodiment, the data processing device 120 may further include a trajectory refinement module 127 configured to refine or improve the prediction of trajectories, based on the determined 3D key points or 3D key point representation(s) of the detected road user.

In a particular embodiment, the trajectory refinement module 127 is configured to assign a score to each trajectory predicted by the prediction module 140, based on the determined 3D body key points. This score may then be used to update a probability value of said predicted trajectory at the output of the trajectory prediction module 140. The trajectory refinement module 127 may be configured to check if each trajectory determined or predicted by the trajectory prediction module 140 for a detected road user, satisfies constraints resulting from determined 3D key points or 3D key point representation(s) of the detected road user and is therefore compatible or coherent with the determined 3D key points, typically 3D body key points. At a current point in time t, the trajectory refinement module 127 may be configured to check if each predicted trajectory is coherent or compatible with the 3D key points the road user, determined in a short-term past from time t-Δt and time t, and assign a score to the predicted trajectory indicative of how it is compatible with the 3D key points of the detected road user or satisfies the constraints resulting from the 3D key points of the road user. The constraints may correspond to predetermined physical constraints associated with key points. Illustrative examples are given below:
- one or more consecutive 3D body key point skeleton models of a pedestrian indicate a static pose of the pedestrian. In that case, the refinement module 127 may determine that any predicted trajectory including a movement of the pedestrian in a short-term future is not coherent and assign a low score to this predicted trajectory;
- one or more 3D body key point skeleton models of a pedestrian indicate a movement of the pedestrian. In that case, the refinement module 127 may determine that any prediction that the pedestrian is static is not coherent and assign a low score to this prediction;
- a 3D body key point skeleton model indicates an orientation of the torso, limbs and head of the pedestrian. In that case, the refinement module 127 may determine that any predicted trajectory including a movement of the pedestrian into a direction different from the orientation of the pedestrian is not coherent and assign a low score to this predicted trajectory;
- a 3D body key point skeleton model indicates a body orientation and a line of sight of the pedestrian. In that case, the refinement module 127 may determine that any predicted trajectory including a linear motion of the pedestrian into a direction different from the direction indicated by the body key points is not coherent and assign a low score to the predicted trajectory;
- a 3D body key point skeleton model indicates a height and length of legs of the pedestrian. In that case, the refinement module 127 may check general physical constraints about a maximum speed of a pedestrian walking or running, refined by the height and length of legs of the pedestrian, to check if the predicted trajectory to be travelled in a given time interval is coherent.

The scores produced by the refinement module 127 may be transmitted to a prediction update module 150, connected to the output of the trajectory prediction module 140. The prediction update module 150 may be configured to update prediction probability values assigned to the trajectories predicted by the trajectory prediction module 140 based on the scores provided by the module 127. For example, the scores produced by the refinement module 127 may be used as a weight parameters to update the probability values of the trajectories predicted by the module 140.

The system 100 may further include a map processing module 130 having the function of producing an image, for example a RGB image, of surroundings of the vehicle 200 based on map data, for example HD (high-definition) map data, transmitted by the source 304 and real time position data or GPS data of the vehicle 200 transmitted by the GPS receiver 303. For example, the module 13 may generate a modified map of an area surrounding the vehicle 200, including static road elements of the following list that is only illustrative and non-exhaustive:
- boardwalk layout;
- road layout;
- road lanes layout;
- zebra crossing areas;
- traffic lights;
- traffic islands;
- lane markings.

The prediction module 140 has the function of predicting a trajectory for a detected road user, for example a pedestrian. It receives, as inputs, the outputs from the fusion and tracking block 114, the processing module 125, the 2D/3D converter 126 and the map processing module 130, as explained later in more detail, and predicts a trajectory for the detected road user based on the inputs. In an embodiment, the prediction module 140 may predict or output a plurality of trajectories and assign a probability value to each predicted trajectory indicative of how it is reliable to predict the trajectory of the road user.

The prediction module 140 may use a machine-learning algorithm to perform the prediction. In an embodiment, it is implemented with a neural network, for example a convolutional neural network (CNN) or a recurrent neural network (RNN).

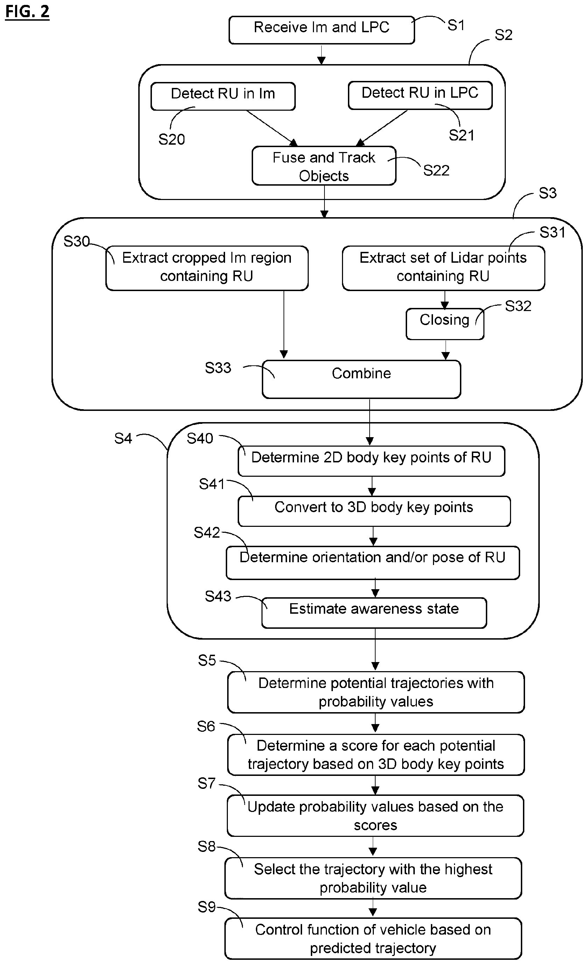

Figure 2 illustrates the method of determining information related to a road user present in an environment of the vehicle 200, according to an embodiment. The method is performed by the system 100.

The method comprises a step S1 of receiving, from vehicle sensors, a digital image Im and a Lidar point cloud LPC, both representing a same scene SC in an environment of the vehicle 200. The vehicle sensors may comprise the camera 301, such as an RGB camera, and the Lidar sensor 302. The camera 301 may be configured to capture 2D images. The digital image Im and the Lidar point cloud LPC are received by the system 100 through the input interface 105 and transmitted to the detection module 110.

The scene SC may contain one or more road users. For the sake of clarity, let's consider that the scene SC includes one road user RU, for example a pedestrian, as an illustrative and non-limitative example.

The method further comprises a step S2 of detecting the road user RU in the scene SC based on the received digital image Im and the received Lidar point cloud LPC, performed by the detection module 110. In the detecting step S2, the object detection block 112 may detect the road user RU in the received digital image Im, in a step S20, and the object detection 113 may detect the road user RU in the received Lidar point cloud LPC, in a step S21, respectively by implementing well-known segmentation methods for digital images and for Lidar point clouds to locate objects. Each detected object corresponds to a set of images pixels in the digital image and to a set of Lidar points in the Lidar point cloud. Then, in a step S23, the fusion and tracking block 114 may fuse the corresponding object detections performed in both image and Lidar domains to detect and track the detected road user RU.

When performing the steps S20, S21, and S23, the detection module 110 may detect and track other road users surrounding the detected road user RU. These other road users are part of a dynamic context around the detected road user RU.

Then, the method comprises a step S3 of generating a combined digital representation R, or image, of the detected user RU by combining corresponding image data and Lidar data associated with the detected road user RU. The step S3 may be performed by the data processing device 120, more precisely by the blocks 122, 123 and 124.

In an embodiment, the step S3 may include a step S30, performed by the preprocessing block 122, of extracting from the received digital image Im a cropped image region containing the detected road user RU.

The cropped image region may be delimited by a bounding box containing the detected road user RU. This bounding box may be determined by the detection block 112 in the segmentation process of the digital image.

The step S3 may further include a step S31 of extracting from the received Lidar point cloud LPC a set of Lidar points including the detected road user RU. In an embodiment, the extracted set of Lidar points may form a Lidar shape matching contour of the detected road user. Optionally, the step S3 may also include a step S32 of increasing the Lidar point density of the extracted set of Lidar points by executing an operation of morphological image processing on the extracted set of Lidar points, for example a morphological closing operation that allows to fill gaps with additional Lidar points. The steps S31, S32 may be performed by the preprocessing block 113.

The step S3 may also include a step S33 of combining the cropped image region and the extracted set of Lidar points to generate a combined digital representation R, or image, of the detected road user RU. This combination can be done by means of transforming the image data and the Lidar data into a common coordinate system. The step S33 may be performed by the block 124. For example, for each image pixel of the cropped image region, the block 124 may determine if there is a corresponding point in the extracted set of Lidar points and, if so, combine the image data of the image pixel and the Lidar data of the corresponding Lidar point. By definition, a Lidar point and an image pixel correspond to each other in case they represent a same element of the detected object or road user.

The combined digital representation R or image of the detected user RU has a plurality of layers, or channels, including one or more image data layers and one or more Lidar data layers.

In an embodiment, the image data may include RGB data and Lidar data may include depth data and intensity data. In that case, the generated digital representation R of the detected road RU user includes a collection of points, or image elements, and, for each point, a combination of corresponding RGB data, depth data, and intensity data. In other words, the generated digital representation of the detected road user may comprise five layers including a R (red) data layer, a G (green) data layer, a B (blue) data layer, a depth data layer, and an intensity data layer.

The method further comprises a step S4 of determining information related to the detected road user by processing the combined digital representation R of the detected road user RU generated in the step S3. The step S4 may be performed by the processing block 125.

The step S4 may include a step S40 of determining key points of the detected road user RU. In case the road user is a pedestrian or a cyclist for example, the determined key points are body key points. A key point representation of the detected road user, such as a body key point skeleton model, can be generated in the step S40.

Optionally, the step S4 may include a step S41 of determining 3D key points in a 3D space, performed by the 2D/3D converter 126, from the key points of the detected road user RU determined in the step S40, based on the Lidar data. In the step S41, the key points determined in the step S40, that are 2D key points, are converted into or mapped to 3D key points in a 3D space by using the depth information provided by the Lidar data. For that purpose, the preprocessing block 123 may transmits the set of extracted Lidar points including the detected road user RU to the 2D/3D converter 126. In the step S41, the 2D key point representation of the detected road user RU can be converted into a 3D key point representation. For example, the 2D body key point skeleton model is converted into 3D body key point skeleton model.

The step S4 may further include a step S42 of determining an orientation and/or pose of the detected road user based on the key points determined in the step S40 or the 3D key points determined in the step S41, and then estimating, based on the determined orientation and/or pose of the detected road user, an awareness information of the detected road user for example by selecting an awareness state among a plurality of predefined awareness states indicative of how the road user is aware of the vehicle. As previously indicated, four classes of awareness states may for example predefined: a) aware, b) partially aware, c) unaware, and d) distracted. The processing block 125 may select one of the predefined awareness state classes, based on the estimated orientation and/or pose of the detected road user, in a step S43.

The steps S1 to S4 are iteratively executed at successive points in time t with consecutive digital images Im and Lidar point clouds LPC received from the sensors 301, 302 over time.

The method may also comprise a step S5 of predicting a trajectory of the detected road user RU performed by the prediction module 140. In the step S5, the prediction module 140 may use as input data, at a current point in time t:
- a series of consecutive states of the detected road user RU, including a plurality of past states and a current state from time *t* - *Δt* to time *t,* provided the block 114 of fusion and tracking;
- a series of consecutive awareness states of the detected road user RU, including a plurality of past awareness states and a current awareness state from time *t* - *Δt* to time *t,* estimated by the processing block 125;
- a series of consecutive body key points or body key point skeleton models of the detected road user RU, including a plurality of past body key points and current body key points from time *t* - *Δt* to time *t,* estimated by the processing block 125;
- information related to a dynamic context or environment around the detected road user RU;
- information related a static context or environment around the detected road user RU.

The information related to the dynamic context of the detected road user RU may include:
- a series of consecutive states of the other road users surrounding the detected road user RU, including a plurality of past states and a current state from time *t* - *Δt* to time *t,* provided the block 114 of fusion and tracking;
- a series of consecutive awareness states of the other road users surrounding the detected road user RU, including a plurality of past awareness states and a current awareness state from time *t - Δt* to time *t,* estimated by the processing block 125;
- a series of consecutive body key points or body key point skeleton models of the other road users surrounding the detected road user RU, including a plurality of past body key points and current body key points from time *t* - *Δt* to time t, determined by the processing block 125.

The information related to static context or environment around the detected road user RU may include a series of modified high-definition maps from *t* - *Δt* to time *t* describing the static context of the of the detected road user RU, determined by the map processing module 130.

In the step S5, the prediction module 140 may determine or predict a plurality of trajectories of the detected road user and, for each trajectory, a probability value indicating how this predicted trajectory is reliable or probable to predict the trajectory of the detected road user RU. These trajectories predicted by the prediction module 140, to which probability values are assigned, can be denoted as potential or possible trajectories. The determination of the plurality of trajectories with respective probability values can the performed by a neural network.

In a training phase, this neural network 140 is trained with input training data and output training data, produced based on digital images and Lidar point clouds captured by a recording vehicle driving in various environments. An input training data may include the tracked detection of a road user, like a pedestrian, from the block of object fusion and tracking 114, along with additional features comprising an awareness state from the processing block 125 and 3D key points from the converter 126, a static context of the environment from the map pre-processing module 130. The neural network 140 is then predicts the trajectory for a plurality of timesteps into the future. During the training, these output trajectories are compared to output training data. The output training data includes actual recorded trajectories. By determining the offset between the predicted trajectory and the actual trajectory, the network can be iteratively trained to learn to predict better from the given input data.

Optionally, the method may comprise a step S6, performed by the trajectory refinement module 127, of determining a score for each predicted trajectory at the output of the module 140, based on the determined 3D body key points. The step S6 may for example include the steps of:
- checking, for each predicted trajectory output by the module 140, if this predicted trajectory is compatible or coherent with the 3D key points or 3D key point representation(s) of the road user RU, for example determined within the time interval from time *t* - *Δt* to time *t,*
- assigning a score to each predicted trajectory, indicative of how this predicted trajectory is compatible with the 3D key points of the road user RU, based on a result of the checking, and
- transmitting the score to the prediction update module 150.

In a step S7, the prediction update module 150 may use the scores received from the module 127 to update the probability values respectively assigned to the predicted trajectories at the output of the prediction module 140. For example, the scores received from the module 127 are used to weight the probability values determined in the step S5.

In a step S8, the prediction module 140, or the prediction update module 150 in case the steps S6 and S7 are performed, may then select the trajectory having the highest probability value and outputs the selected trajectory as the predicted trajectory for the detected road user RU.

The predicted trajectory may then be used to control a function of the vehicle for example a function implemented by an ADAS system of the vehicle, in a step S9. For example, the speed of the vehicle 200 may be automatically decreased based on the predicted trajectory of the detected road user RU.

In another embodiment, the trajectory refinement module 127 may be configured to produce an additional information related to the road user based on the determined 3D key points or 3D key point representation(s) of the detected road user and to provide said additional information to as input to the trajectory prediction module 140. Said additional information may include a range of directions for the predicted trajectories, in which the road user is likely to move based on the determined 3D key points. The range of directions provided by the module 127 includes directions in which the trajectories predicted by the trajectory prediction module 140 should be, or would be considered as plausible or acceptable, based on the determined 3D body key points. On the contrary, predicted trajectories having directions out of the range of directions provided by the module 127 would be considered as not plausible or not acceptable, based on the determined 3D body key points. Said additional information may further include a pose information of the road user. According to this embodiment, the method may include a step of determining said additional information on a range of directions in which the predicted trajectory should be, based on the determined 3D body key points, and a step of providing said information on the range of directions as input to the prediction module 140 for the prediction of trajectory.

The present disclosure also concerns a computer program comprising instructions which, when the program is executed by a computer, cause the computer to carry out the steps of the method previously described including the steps S1 to S8.

According to the present disclosure, the extracted set of Lidar points forms a kind of mask corresponding to a shape of the detected road user RU in the Lidar point cloud. This Lidar mask indicates which area or region of the digital image to focus on to determine 2D key points of the detected road user RU. Furthermore, by combining the cropped image region, that may be a portion of the high-resolution image, and the extracted set of Lidar points or Lidar mask, a 2D digital representation or image of the detected road user RU, having for example three RGB layers, a depth layer and an intensity layer, is created. Based on the created 2D digital representation of the detected road user RU, body key points of the detected road user RU are estimated. The determination of the body key points is performed by processing a small amount of 2D data, which is much less computationally intensive. The body key points are a small number of significant points of the road user RU. Then, the 2D body key points of the detected road user RU are mapped to 3D body key points, based on a depth information of the extracted set of Lidar points or Lidar mask.

## Claims

1. A method of determining information related to a road user in an environment of a vehicle, comprising the steps of:
receiving (S1), from vehicle sensors, a digital image and a Lidar point cloud, both representing a scene in the environment of the vehicle;
detecting (S2) a road user in said scene based on the received digital image and Lidar point cloud;
generating (S3) a combined digital representation of the detected road user by combining corresponding image data and Lidar data associated with the detected road user,
determining (S4) information related to the detected road user by processing the combined digital representation of the detected road user.

2. The method according to claim 1, wherein the step (S4) of determining information related to the detected road user includes determining (S40) key points of the detected road user.

3. The method according to claim 2, further comprising a step (S41) of determining 3D key points in a 3D space from the determined key points of the detected road user, based on the Lidar data.

4. The method according to any of claims 2 and 3, wherein the road user is a pedestrian, and the step of detecting key points includes detecting body key points of the pedestrian.

5. The method according to any of claims 1 to 4, wherein the combined digital representation of the detected road user includes a collection of points and, for each point, a combination of corresponding RGB data, Lidar depth data and Lidar intensity data.

6. The method according to any of claims 2 to 5, wherein the step of determining information related to the detected road user includes determining (S42) an orientation and/or a pose of the detected road user based on the determined key points and estimating (S43), based on the determined orientation and/or pose of the detected road user, an awareness state of said road user selected among a plurality of predefined awareness states indicative of how the user is aware of the vehicle (200).

7. The method according to claim 1 to 6, further comprising a step (S32) of increasing the Lidar point density of the detected road user by performing a morphological image processing operation, before generating the combined digital representation.

8. The method according to claim 7, wherein the morphological image processing operation includes a morphological closing operation for filling gaps in the detected road user.

9. The method according to any of claims 1 to 8, further comprising a step (S8) of predicting a trajectory of the road user based on the determined information related to the road user.

10. The method according to claim 9, further comprising a step (S9) of controlling a function of the vehicle based on the predicted trajectory.

11. The method according to claim 9 or 10 when dependent on claim 3, wherein predicting a trajectory of the road user includes predicting (S5) a plurality of trajectories of the road user with respective probability values and, for each predicted trajectory, and the method further comprises a step (S6) of assigning a score to said predicted trajectory, based on the determined 3D key points, and a step (S7) of updating the probability value of said predicted trajectory based on the assigned score.

12. The method according to claim 9 or 10 when dependent on claim 3, further including a step of determining an information on a range of directions in which the predicted trajectory should be, based on the determined 3D key points, and a step of providing said information on the range of directions as input for the prediction of trajectory.

13. A computer system (100) comprising a processor configured to carry out the steps of the method according to any of claims 1 to 12.

14. A computer program comprising instructions which, when the program is executed by a computer, cause the computer to carry out the steps of the method according to any of claims 1 to 12.

15. A vehicle (200) comprising the system according to claim 13.
